# EUROPÄISCHE PATENTSCHRIFT

(11) **EP 3 459 727 B1**
(45) Veröffentlichungstag und Bekanntmachung des Hinweises auf die Patenterteilung: **29.04.2020**
(21) Anmeldenummer: 18192680.9
(22) Anmeldetag: 05.09.2018
(51) Int. Cl.: B32B 5/02, B29D 23/00, B32B 25/14, B32B 27/12, B32B 27/30, B32B 27/40, B32B 1/08, F16L 11/08, C08L 27/06, C08L 75/04

(54) **SCHLAUCH**
HOSE
FLEXIBLE

(30) Priorität: 26.09.2017 DE 102017122206
(43) Veröffentlichungstag der Anmeldung: 27.03.2019
(73) Patentinhaber: REHAU AG + Co, 95111 Rehau (DE)
(72) Erfinder: Biedermann, Armin, 95131 Scharzenbach am Wald (DE); Müller, Jörg, 95028 Hof (DE); Wendel, Andreas, 95111 Rehau (DE); Wazlawik, Klaus, 95030 Hof (DE)

(56) Entgegenhaltungen:
- DATABASE WPI Week 201632 Thomson Scientific, London, GB; AN 2016-215029 XP002787882, & CN 105 437 576 A (5ELEM MATERIAL SCI JIANGSU CO LTD) 30. März 2016 (2016-03-30)

## Beschreibung

Die Erfindung betrifft einen Schlauch, insbesondere Kühlmittelschlauch für den Anlagen- und Gerätebau, zum Transport eines Fluides mit
- einer PVC-Material enthaltenden Tragschicht und
- einer die Tragschicht umgebenden Armierungsschicht.

Derartige Schläuche sind im Stand der Technik weithin bekannt und werden beispielsweise zur Werkzeugkühlung in Maschinen, insbesondere Spritzgussmaschinen eingesetzt. Hierbei werden an die Abriebfestigkeit und auch die Temperaturbeständigkeit des eingesetzten PVC-Materials hohe Anforderungen gestellt, die immer weiter ansteigen. Dies hängt u.a. z.B. bei Spritzugussmaschinen damit zusammen, dass thermisch immer höher belastbare Werkstoffe im Spritzguss verarbeitet werden und damit entsprechend auch die Verarbeitungstemperaturen steigen, wodurch sich wiederum die Temperaturen im Kühlmittelkreislauf erhöhen. Reines PVC ist hierbei auf Werte von ca. 60 °C limitiert. Zudem werden aus ökonomischen Gründen die Taktzeiten stetig kürzer und die Wartungszeiten müssen auf ein Minimum reduziert werden (economic maintenance), um die Ausbringungsmenge und Produktqualität der Spritzlinge auf einem konstant hohen Niveau zu halten. Dadurch müssen auch die im Kühlmittelkreislauf verbauten Schläuche wartungsärmer, d.h. langlebiger und verschleißfester werden. Mit PVC-Material wird es daher immer schwieriger, die geschilderten Anforderungen zu erfüllen. Im Stand der Technik sind thermisch höher belastbare und verschleißfeste Materialien bekannt; diese sind jedoch vergleichsweise teuer.

Ein Schlauch mit den Merkmalen des Oberbegriffs des Patentanspruchs 1 ist aus dem Dokument "DATABASE WPI, Week 201632, Thomson Scientific, London, GB; AN 2016-215029 & CN 105 437 576 A (5ELEM MATERIAL SCI JIANGSU CO LTC) 30. März 2016 (2016-03-30)" bekannt.

Ausgehend von diesem Stand der Technik liegt der Erfindung die Aufgabe zugrunde, einen Schlauch anzugeben, der thermisch hoch belastbar ist, eine hohe Verschleißfestigkeit aufweist und dabei gleichzeitig kostengünstig herstellbar ist.

Erfindungsgemäß wird diese Aufgabe durch die Merkmale des Patentanspruchs 1 gelöst. Erfindungsgemäß wurde erkannt, dass durch ein physikalisches Einmischen von TPU in das PVC-Material die thermische und mechanische Belastbarkeit des Blends gegenüber reinem PVC deutlich verbessert werden kann, ohne dass hierdurch die Herstellungskosten zu stark ansteigen. Da es sich bei PVC und TPU um miteinander verträgliche Materialien handelt, können beide Materialien gemeinsam als homogene Schmelze zur Tragschicht verarbeitet, z.B. extrudiert werden. Zweckmäßigerweise bildet die Tragschicht die innerste Schicht des Schlauches.

Erfindungsgemäß ist der Tragschicht kein zusätzlicher Weichmacher (z.B. Phthalate, DINCH, Sojaöl etc.) zugesetzt, wie er ansonsten beim Einsatz von reinem PVC-Material zur Gewährleistung der gewünschten Flexibilität praktisch immer erforderlich ist. Es wurde erkannt, dass durch die Zumischung von TPU der erhaltene Blend über eine ausreichende Flexibilität verfügt. Erfindungsgemäß weist die Tragschicht eine Härte Shore A von 60 bis 85 auf.

Zweckmäßigerweise sind im fertig hergestellten Schlauch PVC und TPU in der Tragschicht homogen verteilt. Die Armierungsschicht kann aus gewickelten und / oder geflochtenen Fäden und / oder Filamenten gebildet sein. Hierdurch wird die Druckbelastbarkeit des Schlauches gegenüber unarmierten Ausführungsformen wesentlich verbessert, so dass beispielsweise Betriebsdrücke zur Führung des Fluides von 10 bar ü problemlos realisiert werden können.

Gemäß einer bevorzugten Ausführungsform der Erfindung ist die Armierungsschicht von einer polymeren Schutzschicht umgeben, die vorzugsweise ebenfalls eine, insbesondere homogene, Mischung aus PVC und TPU enthält. Auch diese Schutzschicht ist zweckmäigerweise frei von einem zusätzlichen Weichmacher. Die Schutzschicht kann eine Härte Shore A von 60 bis 85 aufweisen.

Erfindungsgemäß beträgt in der Tragschicht in Gewichtsanteilen das Mischungsverhältnis von PVC zu TPU 40:60 bis 80:20. Hierdurch ist es in vorteilhafter Weise möglich, zumindest kurzzeitig den Schlauch mit einer Temperatur von 80 °C zu beaufschlagen, ohne dass dieser hierdurch Schaden nimmt. Zweckmäßigerweise ist das TPU als aromatischer Polyethertyp (TPU-ARET) ausgebildet; alternativ können auch aromatische Polyethercarbonate (TPU-ARCE) oder auch aromatische oder aliphatische Polyester- oder Ether-Ester-Hybrid-TPUs eingesetzt werden. Im Rahmen der Erfindung liegt es insbesondere, dass in der Tragschicht in Gewichtsanteilen das Mischungsverhältnis von PVC zu TPU 45:55 bis 55:45 oder 65:35 bis 75:25 beträgt. Ferner liegt es im Rahmen der Erfindung, dass auch in der Schutzschicht in Gewichtsanteilen das Mischungsverhältnis von PVC zu TPU 40:60 bis 80:20, vorzugsweise 45:55 bis 55:45 oder 65:35 bis 75:25 beträgt.

Gegenstand der Erfindung ist auch ein Verfahren zur Herstellung eines vorbeschriebenen Schlauches, wobei die Tragschicht und/oder die Schutzschicht mittels einer Extrusion hergestellt wird und wobei die Vermischung der Materialen PVC und TPU erst im Rahmen des Extrusionsschrittes erfolgt. Im Rahmen der Erfindung hat sich herausgestellt, dass die durch die Extrusion hervorgerufenen Scherkräfte im Tragschicht- bzw. Schutzschichtmaterial ausreichen, um eine homogene Mischung von PVC und TPU in den fertig hergestellten Schichten zu gewährleisten. Vorzugsweise wird hierbei die Extrusion mit einem Schneckenextruder durchgeführt. Durch die Schnecke werden die beiden Komponenten so innig miteinander in Kontakt gebracht, dass im Extruderkopf die gewünschte homogene Mischung vorliegt. Die Herstellung eines PVC-TPU-Blends in einem separaten Mischer vor der Extrusionsschritt ist dann nicht mehr erforderlich.

Wie bereits erläutert, kann der erfindungsgemäße Schlauch insbesondere als Kühlmittelschlauch für Spritzgussmaschinen verwendet werden. Andere Einsatzgebiete, insbesondere als Kühlmittelschlauch im Anlagen- und/oder Gerätebau, werden hierdurch jedoch nicht ausgeschlossen.

Im Folgenden wird die Erfindung anhand einer lediglich ein Ausführungsbeispiel darstellenden Zeichnung ausführlich erläutert. Es zeigen schematisch:
- Fig. 1: einen erfindungsgemäßen Schlauch ausschnittsweise in einer Seitenansicht,
- Fig. 2: den in Fig. 1 gezeigten Schlauch in einer Querschnittsdarstellung und
- Fig. 3: einen Verfahrensschritt zur Herstellung des in den Fig. 1 und 2 dargestellten Schlauches.

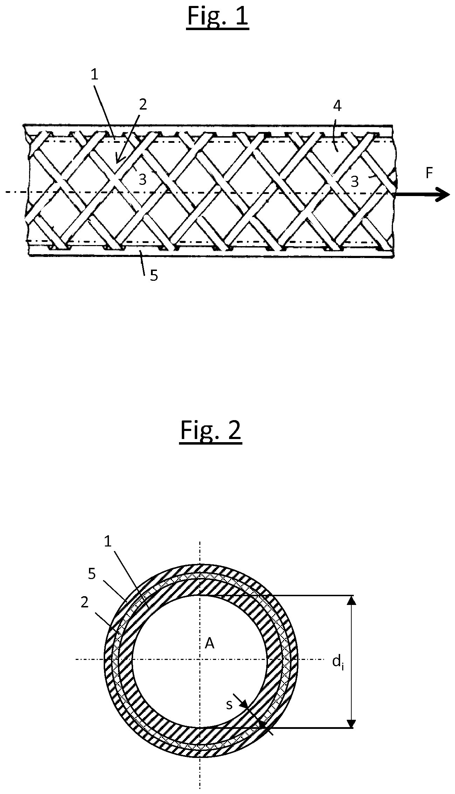

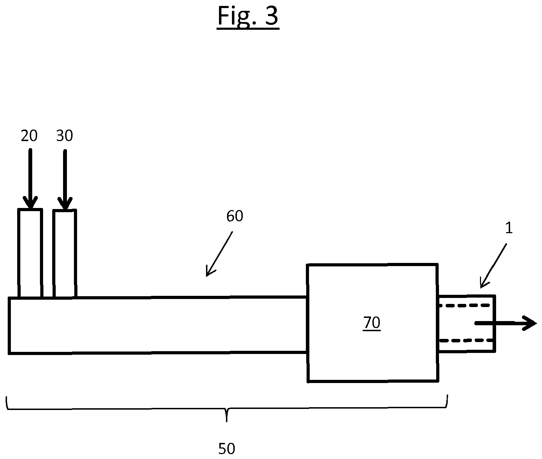

Die Fig. 1 und 2 zeigen einen erfindungsgemäßen Kühlmittelschlauch 1, der zum Transport eines flüssigen Kühlmittels F in einer (nicht dargestellten) Spritzgussmaschine vorgesehen ist. Der Schlauch 1 weist eine PVC-Material 20 (s. Fig. 3) enthaltende Tragschicht 1 und eine die Tragschicht 1 umgebenden Armierungsschicht 2 auf. Die Tragschicht 1 bildet die innerste Schicht des Schlauches. Die Armierungsschicht 2 ist aus offen geflochtenen Fäden 3 gebildet, so dass zwischen den Fäden Freiräume 4 verbleiben. Der Innendurchmesser dᵢ der den freien Strömungsquerschnitt A definierenden Tragschicht beträgt 5 bis 30 mm, zum Beispiel 10 bis 20 mm. Die Schichtdicke s der Tragschicht beträgt 0,5 bis 4 mm, z.B. 1 bis 3 mm.

Die Tragschicht 1 enthält neben dem PVC 20 zusätzlich ein thermoplatisches Elastomer auf Urethanbasis (TPU) 30 (s. Fig. 3), welches sowohl die Flexibilität als auch die thermische Beständigkeit der Tragschicht 1 erhöht. Aus diesem Grund ist der Tragschicht 1 kein zusätzlicher Weichmacher zugesetzt. Das PVC 20 und das TPU 30 sind in der Tragschicht homogen verteilt. Die Armierungsschicht 2 ist von einer polymeren Schutzschicht 5 umgeben, die ebenfalls eine Mischung aus PVC 20 und TPU 30 enthält. In der Tragschicht 1 beträgt in Gewichtsanteilen das Mischungsverhältnis von PVC zu TPU 65:35 bis 75:25, insbesondere 70:30, während in der Schutzschicht 5 dieses Mischungsverhältnis 45:55 bis 55:45, insbesondere 50:50 beträgt. Das TPU 30 ist sowohl in der Tragschicht 1 als auch in der Schutzschicht 5 als aromatischer Polyethertyp (TPU-ARET) ausgebildet.

Die Fig. 3 zeigt ein Verfahren zur Herstellung der in den Fig. 1 und 2 dargestellten Tragschicht 1. Die Tragschicht 1 wird mittels einer Extrusion hergestellt, wobei die Vermischung der Materialen PVC 20 und TPU 30 erst im Rahmen des Extrusionsschrittes erfolgt. Die Extrusion wird mit einem Schneckenextruder 50 durchgeführt. Die Scherkräfte der in einem Gehäuse 60 befindlichen (nicht näher dargestellten) Extruderschnecke reichen aus, um die beiden Materialien 20 und 30 bei deren Durchlauf entlang der Extruderschnecke intensiv zu durchmischen, so dass sie im Extruderkopf 60 als homogene Mischung vorliegen. Diese homogene Mischung kann dann im Extruderkopf 60 zur Tragschicht 1 verarbeitet werden. Nach einer Umflechtung dieser Tragschicht 1 durch die Fäden 3 der Armierungsschicht 2 kann die Schutzschicht 5 in zur Tragschicht 1 analoger Weise hergestellt und auf die Armierungsschicht 2 aufgebracht werden.

## Patentansprüche

1. Schlauch, insbesondere Kühlmittelschlauch für den Anlagen- und Gerätebau, zum Transport eines Fluides (F) mit
- einer PVC-Material enthaltenden Tragschicht (1) und
- einer die Tragschicht (1) umgebenden Armierungsschicht (2),
wobei die Tragschicht (1) neben PVC zusätzlich ein thermoplatisches Elastomer auf Urethanbasis (TPU) enthält, welches sowohl die Flexibilität als auch die thermische Beständigkeit der Tragschicht (1) erhöht,
**dadurch gekennzeichnet, dass** in der Tragschicht (1) in Gewichtsanteilen das Mischungsverhältnis von PVC zu TPU 40:60 bis 80:20 beträgt, dass der Tragschicht (1) kein zusätzlicher Weichmacher zugesetzt ist und dass die Tragschicht (1) eine Härte Shore A von 60 bis 85 aufweist.

2. Schlauch nach Anspruch 1, **dadurch gekennzeichnet, dass** die Tragschícht (1) die innerste Schicht des Schlauches bildet.

3. Schlauch nach Anspruch 1 oder 2, **dadurch gekennzeichnet, dass** PVC und TPU in der Tragschicht homogen verteilt sind.

4. Schlauch nach einem der Ansprüche 1 bis 3, **dadurch gekennzeichnet, dass** die Armierungsschicht (2) aus gewickelten und / oder geflochtenen Fäden (3) und / oder Filamenten gebildet ist.

5. Schlauch nach einem der Ansprüche 1 bis 4, **dadurch gekennzeichnet, dass** die Armierungsschicht (2) von einer polymeren Schutzschicht (5) umgeben ist, die vorzugsweise ebenfalls eine Mischung aus PVC und TPU enthält.

6. Schlauch nach einem der Ansprüche 1 bis 5, **dadurch gekennzeichnet, dass** in der Tragschicht (1) in Gewichtsanteilen das Mischungsverhältnis von PVC zu TPU 45:55 bis 55:45 oder 65:35 bis 75:25 beträgt.

7. Schlauch nach einem der Ansprüche 1 bis 6, **dadurch gekennzeichnet, dass** in der Schutzschicht (5) in Gewichtsanteilen das Mischungsverhältnis von PVC zu TPU 40:60 bis 80:20, vorzugsweise 45:55 bis 55:45 oder 65:35 bis 75:25 beträgt.

8. Schlauch nach einem der Ansprüche 1 bis 7, **dadurch gekennzeichnet, dass** das TPU als aromatischer Polyethertyp (TPU-ARET) ausgebildet ist.

9. Verfahren zur Herstellung eines Schlauches nach einem der Ansprüche 1 bis 8, wobei die Tragschicht (1) und/oder die Schutzschicht (5) mittels einer Extrusion hergestellt wird und wobei die Vermischung der Materialen PVC und TPU erst im Rahmen des Extrusionsschrittes erfolgt.

10. Verfahren nach Anspruch 9, wobei die Extrusion mit einem Schneckenextruder durchgeführt wird.

## Claims

1. Hose, in particular coolant hose for plant and apparatus construction, for transporting a fluid (F) with
- a base layer (1) containing a PVC material and
- a reinforcing layer (2) enclosing the base layer (1),
wherein apart from PVC the base layer (1) additionally contains a urethane-based thermoplastic elastomer (TPU), which increases both the flexibility and the thermal resistance of the base layer (1),
**characterised in that** in the base layer (1) the mix ratio of PVC to TPU in proportions by weight is 40:60 to 80:20, that no additional plasticiser is added to the base layer (1) and that the base layer (1) has a Shore A hardness of 60 to 85.

2. Hose according to claim 1, **characterised in that** the base layer (1) forms the innermost layer of the hose.

3. Hose according to claim 1 or 2, **characterised in that** PVC and TPU are distributed homogeneously in the base layer.

4. Hose according to one of claims 1 to 3, **characterised in that** the reinforcing layer (2) is formed from wound and/or braided threads (3) and/or filaments.

5. Hose according to one of claims 1 to 4, **characterised in that** the reinforcing layer (2) is enclosed by a polymer protective layer (5), which preferably likewise contains a mix of PVC and TPU.

6. Hose according to one of claims 1 to 5, **characterised in that** in the base layer (1) in proportions by weight the mix ratio of PVC to TPU is 45:55 to 55:45 or 65:35 to 75:25.

7. Hose according to one of claims 1 to 6, **characterised in that** in the protective layer (5) in proportions by weight the mix ratio of PVC to TPU is 40:60 to 80:20, preferably 45:55 to 55:45 or 65:35 to 75:25.

8. Hose according to one of claims 1 to 7, **characterised in that** the TPU is configured as an aromatic polyether type (TPU-ARET).

9. Method for manufacturing a hose according to one of claims 1 to 8, wherein the base layer (1) and/or the protective layer (5) is manufactured by means of extrusion and wherein the mixing of the materials PVC and TPU only takes place as part of the extrusion step.

10. Method according to claim 9, wherein the extrusion is carried out by a screw extruder.

## Revendications

1. Tuyau flexible, en particulier tuyau flexible pour réfrigérant pour la construction d'installations et d'appareils, servant au transport d'un fluide (F) avec
- une couche de support (1) contenant un matériau en PVC, et
- une couche d'arrêt (2) entourant la couche de support (1),
dans lequel la couche de support (1) contient outre le PVC en supplément un élastomère thermoplastique à base d'uréthane (TPU), lequel augmente à la fois la flexibilité et la résistance thermique de la couche de support (1),
**caractérisé en ce que** le rapport de mélange entre le PVC et le TPU va de 40:60 à 80:20 en fractions de poids dans la couche de support (1), qu'aucun plastifiant supplémentaire n'est ajouté à la couche de support (1), et que la couche de support (1) présente une dureté Shore A de 60 à 85.

2. Tuyau flexible selon la revendication 1, **caractérisé en ce que** la couche de support (1) forme la couche la plus intérieure du tuyau flexible.

3. Tuyau flexible selon la revendication 1 ou 2, **caractérisé en ce que** le PVC et le TPU sont répartis de manière homogène dans la couche de support.

4. Tuyau flexible selon l'une quelconque des revendications 1 à 3, **caractérisé en ce que** la couche de blindage (2) est formée à partir de fils (3) et/ou de filaments enroulés et/ou tressés.

5. Tuyau flexible selon l'une quelconque des revendications 1 à 4, **caractérisé en ce que** la couche de blindage (2) est entourée d'une couche de protection polymère (5), qui contient de préférence également un mélange composé de PVC et de TPU.

6. Tuyau flexible selon l'une quelconque des revendications 1 à 5, **caractérisé en ce que** le rapport de mélange entre le PVC et le TPU va de 45:55 à 55:45 ou de 65:35 à 75:25 en fractions en poids dans la couche de support (1).

7. Tuyau flexible selon l'une quelconque des revendications 1 à 6, **caractérisé en ce que** le rapport de mélange entre le PVC et le TPU va de 40:60 à 80:20, de préférence de 45:55 à 55:45 ou de 65:35 à 75;25 en fractions en poids dans la couche de protection (5).

8. Tuyau flexible selon l'une quelconque des revendications 1 à 7, **caractérisé en ce que** le TPU est réalisé en tant qu'un type de polyéther aromatique (TPU-ARET).

9. Procédé de fabrication d'un tuyau flexible selon l'une quelconque des revendications 1 à 8, dans lequel la couche de support (1) et/ou la couche de protection (5) sont fabriquées au moyen d'une extrusion et dans lequel le mélange des matériaux PVC et TPU a lieu seulement dans le cadre de l'étape d'extrusion.

10. Procédé selon la revendication 9, dans lequel l'extrusion est mise en œuvre avec une extrudeuse à vis.
